# EUROPÄISCHE PATENTSCHRIFT

(11) **EP 2 841 787 B1**
(45) Veröffentlichungstag und Bekanntmachung des Hinweises auf die Patenterteilung: **14.10.2015**
(21) Anmeldenummer: 13718118.6
(22) Anmeldetag: 13.04.2013
(51) Int. Cl.: F16D 23/02

(54) **SYNCHRONRINGPAKET FÜR EIN GETRIEBE**
SYNCHRONISER RING ASSEMBLY FOR A GEAR UNIT
ENSEMBLE DE BAGUES DE SYNCHRONISATION POUR UNE TRANSMISSION

(30) Priorität: 24.04.2012 DE 102012008138
(43) Veröffentlichungstag der Anmeldung: 04.03.2015
(73) Patentinhaber: Diehl Metall Stiftung & Co. KG, 90552 Röthenbach (DE)
(72) Erfinder: ERDMANN, Knut, 90478 Nürnberg (DE); ARBAK, Murat, 91207 Lauf an der Pegnitz (DE); DÖNGES, Christian, 90489 Nürnberg (DE)
(74) Vertreter: Diehl Patentabteilung
(86) Internationale Anmeldenummer: PCT/EP2013/001091
(87) Internationale Veröffentlichungsnummer: WO 2013/159873

(56) Entgegenhaltungen:
- WO-A1-2010/130366
- DE-A1-102008 047 483
- US-A- 5 135 087
- US-A1- 2008 149 450

## Beschreibung

Die Erfindung betrifft insbesondere ein Synchronringpaket für ein Getriebe, mit einem Außensynchronring und einem Innensynchronring Synchronringpakete dienen dazu, die Drehzahlen von zwei drehbaren Baugruppen anzugleichen. Oftmals und in der Regel werden Synchronringpakete in Schaltgetrieben von Automobilen eingesetzt, um unterschiedliche Drehzahlen z.B. von einem zu schaltenden Gangrad und einer Welle aneinander anzugleichen.

Ein Synchronringpaket ist der in der Druckschrift DE 10 2005 035 941 B3 offenbart. Das Synchronringpaket ist für ein Schaltgetriebe ausgebildet und umfasst einen äußeren Synchronring, einen Zwischenring und einen inneren Synchronring. Der äußere Synchronring und innere Synchronring weisen jeweils Mitnehmerorgane auf, über welche der innere und äußere Synchronring in Umlaufrichtung bzw. Umfangsrichtung formschlüssig miteinander gekoppelt sind.

Die weitere Druckschrift US 2008/0149450 offenbart den Oberbegriff von Anspruch 1.

Der Erfindung liegt die Aufgabe zugrunde, ein Synchronringpaket vorzuschlagen, welches verbesserte funktionale Eigenschaften, insbesondere verbesserte Mitnehmerorgane, aufweist. Ferner soll eine Synchronkupplung und ein Getriebe vorgeschlagen werden. Diese Aufgabe wird gelöst durch die Patentansprüche 1, 15 und 16. Ausgestaltungen der Erfindung ergeben sich aus den Unteransprüchen, der nachfolgenden Beschreibung sowie den beigefügten Figuren.

Nach Patentanspruch 1 ist ein Synchronringpaket vorgesehen, welches für ein Getriebe, insbesondere für ein Schaltgetriebe oder ein Automatikgetriebe, geeignet und/oder ausgebildet ist. Besonders bevorzugt ist das Synchronringpaket für ein Getriebe eines Fahrzeugs, insbesondere Automobils, ausgebildet.

Das Synchronringpaket umfasst einen Außensynchronring, und einen Innensynchronring, welche koaxial zueinander, insbesondere koaxial zu einer gemeinsamen Hauptdrehachse, angeordnet sind. In Betriebsstellung des Synchronringpakets überlappen Außensynchronring und Innensynchronring, zumindest teilweise, in radialer Richtung.

Ein Synchronringpaket mit Außensynchronring und Innensynchronring weist in der Regel zumindest einen Zwischenring auf, der in ordnungsgemäß eingebautem Zustand, d. h. in Betriebsstellung, koaxial zur Hauptdrehachse und bezüglich der radialen Richtung zwischen Außensynchronring und Innensynchronring angeordnet ist. Der Zwischenring überlappt in Betriebsstellung zumindest teilweise mit dem Außensynchronring und Innensynchronring. Genauer überlappen in Betriebsstellung, d. h. in ordnungsgemäß zusammengebautem Zustand, zueinander korrespondierende Reibflächen von Außensynchronring, Innensynchronring und Zwischenring. Derartige Synchronringpakete können für 2- oder 3-fach Synchronisierungen verwendet werden.

Der Außensynchronring des Synchronringpakets weist mindestens ein erstes Mitnehmerorgan auf. Der Innensynchronring weist mindestens ein zweites Mitnehmerorgan auf. Besonders bevorzugt weist jeder der Ringe mehrere derartige Mitnehmerorgane auf. In einer spezifischen Ausgestaltung umfasst jeder der Ringe drei, vier, fünf oder mehr Mitnehmerorgane, welche in Umlaufrichtung um die Hauptdrehachse, d. h. in Umfangsrichtung des jeweiligen Synchronrings, verteilt, insbesondere gleichmäßig verteilt, angeordnet sein können.

Für die reibschlüssige Kopplung weist der Außensynchronring eine radial nach innen gerichtete, vorzugsweise konusförmig verlaufende Reibfläche und der Innensynchronring eine radial nach außen gerichtete, vorzugsweise konusförmig verlaufende Reibfläche auf, welche über einen oder mehrere Zwischenringe miteinander reibschlüssig gekoppelt werden, bzw. in der Betriebsstellung miteinander gekoppelt sind oder gekoppelt werden können.

Der oder die Zwischenringe weisen vorzugsweise jeweils an der radialen Innenseite und an der radialen Außenseite eine Reibfläche auf, welche mit einer benachbarten Reibfläche insbesondere des Außensynchronrings, des Innensynchronrings oder eines weiteren Zwischenrings reibschlüssig gekoppelt werden kann. Weist das Synchronringpaket nur einen Zwischenring auf, so können, insbesondere für einen Synchronisationsvorgang, die äußere Reibfläche des Zwischenrings mit der inneren Reibfläche des Außensynchronrings und die innere Reibfläche des Zwischenrings mit der äußeren Reibfläche des Innensynchronrings in reibschlüssigen Kontakt gebracht werden. Durch den oder die Zwischenringe wird, gegenüber einer Einfachsynchronisation mit lediglich einem Synchronring, die effektiv wirksame Reibfläche vergrößert, so dass eine schnellere Anpassung unterschiedlicher Drehzahlen erfolgen kann.

Der Außensynchronring und der Innensynchronring sind über das zumindest eine erste Mitnehmerorgan und das zumindest eine zweite Mitnehmerorgan in mindestens einem Kopplungsbereich in Umlaufrichtung formschlüssig miteinander koppelbar, bzw. in Betriebsstellung gekoppelt, insbesondere relativ drehfest miteinander verbunden oder verbindbar. Insbesondere können die ersten und zweiten Mitnehmerorgane derart ausgestaltet sein, dass in Umfangsrichtung orientierte oder ausgerichtete, und einander zugewandte Stirnflächen benachbart gelegener Mitnehmerorgane aneinander anschlagen können. Auf diese weise können Außensynchronring und Innensynchronring verdrehsicher miteinander gekoppelt werden. Die Stirnflächen der Mitnehmerorgane bilden insbesondere Flanken bzw. Anschlagflächen, deren Hauptausrichtung in Umfangsrichtung des jeweiligen Synchronrings liegt. In einem formschlüssigen Kopplungszustand von Außensynchronring und Innensynchronring greifen die ersten und zweiten Mitnehmerorgane ineinander, wobei über die dann aneinander anschlagenden Mitnehmerflächen bzw. Anschlagflächen eine Relativdrehung zwischen Außensynchronring und Innensynchronring verhindert werden kann. Bevorzugt sind die ersten und zweiten Mitnehmerorgane in Umfangsrichtung des Synchronringpakets alternierend angeordnet und greifen zahnradgleich ineinander.

Die Mitnehmerorgane bilden insbesondere im Kopplungsbereich zueinander korrespondierende, insbesondere paarweise einander zugewandte, im Wesentlichen in Umfangsrichtung orientierte, Mitnehmerflächen, bzw. Flanken bzw. Anschlagflächen, aus. Die Mitnehmerflächen benachbarter erster und zweiter Mitnehmerorgane sind im formschlüssigen Kopplungszustand bei Sperrung einer Relativverdrehung des Außensynchronrings und Innensynchronrings aneinander angeschlagen, bzw. die korrespondierenden Mitnehmerflächen liegen aneinander an.

Vorzugsweise wird bzw. ist an jedem Übergang zwischen einem ersten und zweiten Mitnehmerorgan ein Kopplungsbereich mit entsprechenden Mitnehmerflächen ausgebildet.

Zumindest eine der zueinander korrespondierenden Mitnehmerflächen weist in Querschnitten senkrecht zur Hauptdrehachse, d. h. in Ebenen parallel zur radialen Richtung, einen gekrümmten Verlauf auf. Das soll bedeuten, dass die entsprechende Mitnehmerfläche bzw. Flanke bzw. Anschlagfläche gekrümmt ausgebildet ist, insbesondere bezüglich der radialen Richtung gekrümmt ausgebildet ist. Die Krümmung der Mitnehmerfläche ist bevorzugt derart, dass sich berührende bzw. aneinander angeschlagene Mitnehmerflächen zumindest in zumindest einem Linienkontakt, bevorzugt in einem Flächenkontakt, berühren.

Der Linienkontakt verläuft bevorzugt im Wesentlichen parallel zur Hauptdrehachse des Synchronringpakets.

Durch einen gekrümmten Verlauf der zumindest einen Mitnehmerfläche kann insbesondere ein verbesserter Kontakt zwischen dem Mitnehmerflächen der Mitnehmerorgane im Kopplungsbereich erreicht werden. Es können insbesondere der Krafteintrag in das jeweilige Mitnehmerorgan und/oder eine vorteilhaftere Verteilung der Normalspannung im Bereich der Mitnehmerfläche erreicht werden.

Durch die gekrümmte Ausbildung der Mitnehmerflächen können insbesondere im Bereich des Kontakts aneinander anschlagender Mitnehmerorgane im Wesentlichen elastische Verformungen erreicht werden, so dass das Verschleißverhalten an bzw. in den Mitnehmerflächen verbessert werden kann.

Vorteilhafter Weise können mit der zumindest einen gekrümmtem Mitnehmerfläche die bei üblichen, geraden insbesondere im Wesentlichen parallel zur radialen Richtung verlaufenden Mitnehmerflächen auftretenden plastischen Verformungen im Bereich der Kontaktflächen bzw. Kontaktlinien oder Kontaktstellen zumindest deutlich reduziert werden. Durch die verbesserten Kontaktbedingungen können im Verlauf der Benutzung insbesondere Rissbildung und kritische Spannungskonzentration vermieden, jedenfalls größtenteils reduziert werden, was insbesondere mit einer Erhöhung der Lebensdauer einhergeht.

Wie bereits erwähnt weisen Mitnehmerflächen bisheriger Synchronringpakete stets einen geradlinigen Verlauf auf, welcher insbesondere parallel zu einem Radialvektor zu der Hauptdrehachse verläuft. Aufgrund von Fertigungstoleranzen können die Flanken der aneinanderstoßenden Mitnehmerorgane, die theoretisch parallel zueinander sein sollen, unterschiedliche Winkel aufweisen. In einem solchen Fall ergeben sich insbesondere Linienkontakte bzw. deutlich reduzierte Flächenkontakte, bei welchen es wegen der im Unterschied zur Erfindung geraden Ausbildung der Mitnehmerflächen zu erhöhtem Verschleiß, insbesondere auf Grund plastischer Verformung im Kontaktbereich, kommt, letztendlich zu einem frühzeitigen Ausfall des Synchronringpakets führen kann.

Demgegenüber kann durch den gekrümmten Verlauf zumindest einer Mitnehmerfläche, wie bereits ausgeführt, ein verbesserter Flächenkontakt zwischen den Flanken der Mitnehmerorgane, insbesondere unabhängig bzw. im Wesentlichen unabhängig von Fertigungstoleranzen erreicht werden. Insbesondere ist es möglich, dass durch einen verbesserten Krafteintrag Normalspannungen auf ein niedriges bzw. niedrigeres Niveau gesenkt werden können.

Ein weiterer, möglicher Vorteil liegt darin, dass durch den gekrümmten Verlauf eine Zentrierung, insbesondere eine Selbstzentrierung des Innensynchronrings erreicht werden kann.

In einer bevorzugten Ausführungsform kann der Verlauf der Mitnehmerfläche im Querschnitt in axialer Richtung d.h. in Tiefenerstreckung konstant sein. In diesem Fall kann erreicht werden, dass der Verlauf bei Querschnitten an unterschiedlich axialen Positionen durch die Mitnehmerfläche in axialer Draufsicht oder Projektion stets deckungsgleich ist. Mit dieser Ausgestaltung kann vorteilhafter Weise erreicht werden, dass sich Außensynchronring und Innensynchronring bei einem Schaltvorgang bzw. Anfangsstadium eines Synchronisationsvorgangs nicht miteinander verhaken können.

In einer weiteren Ausgestaltung ist der Verlauf jeder der Mitnehmerflächen im Querschnitt in axialer Richtung jeweils konstant. Möglich ist es hingegen auch, dass der Verlauf der Mitnehmerfläche/n bezüglich Querschnitten und bezüglich der axialen Richtung variiert, insbesondere schrägaxial, d. h. Schräg zum axialen Vektor, ausgebildet ist. Bevorzugt ändert sich die die Mitnehmerfläche bei veränderlichem Verlauf stetig.

Bei einer besonders bevorzugten Ausgestaltung sind beide Mitnehmerflächen zumindest im Kopplungsbereich in korrespondierenden Querschnitten gleichsinnig gekrümmt. Das soll insbesondere bedeuten, dass einander zugewandte Mitnehmerflächen dem Betrage nach im Wesentlichen übereinstimmende Krümmungsradien aufweisen. Die Formulierung "im Wesentlichen übereinstimmend" soll hier insbesondere Abweichungen durch Fertigungstoleranzen und dgl. mit umfassen.

Insbesondere bei gleichsinniger Krümmung weisen einander zugewandte und zum aneinander Anschlagen ausgebildete Mitnehmerflächen gleiche bzw. im Wesentlichen gleiche Krümmungsradien mit entgegengesetzen Vorzeichen auf. Bei gleichsinniger Krümmung beider Mitnehmerflächen, d. h. der Mitnehmerfläche des Außensynchronrings und der jeweils gegenüberliegenden bzw. korrespondierenden Mitnehmerfläche des Innensynchronrings, können ein besonders vorteilhafter Krafteintrag in die Mitnehmerorgane und/oder besonders vorteilhafte Verschleißeigenschaften erreicht werden.

Bei einer weiteren Ausgestaltung sind die Mitnehmerflächen in Querschnitten einfach gekrümmt. Insbesondere in diesen Fällen weist der Verlauf der Mitnehmerflächen keine Wendepunkte auf. Solche Ausgestaltungen sind vergleichsweise einfach darzustellen und ermöglichen eine besonders gleichmäßige Krafteinleitung entlang des Verlaufs der Mitnehmerflächen.

In einer besonders bevorzugten Ausgestaltung ist die Mitnehmerfläche des zumindest einen ersten Mitnehmerorgans in Querschnitten konkav, und das mindestens eine zweite Mitnehmerorgan in Querschnitten konvex gekrümmt. Durch diese Ausgestaltung kann erreicht werden, dass insbesondere in den Außensynchronring keine störenden, insbesondere für die Lebensdauer abträglichen, Kerbspannungen eingeleitet werden.

Nach einer Ausgestaltung ist vorgesehen, dass die Mitnehmerflächen konstante Krümmungsradien aufweisen. Krümmungsradien der Mitnehmerflächen liegen dem Betrage nach bevorzugt zwischen 1 und 30 mm, bevorzugt zwischen 1 und 20 mm, bevorzugt zwischen 1 und 10 mm, besonders bevorzugt bei 2, 4, 6 oder 8 mm oder beliebigen Zwischenwerten.

Bei einer konstruktiven Ausgestaltung der Erfindung kann der Verlauf der Mitnehmerfläche im Querschnitt als eine Freiformkurve ausgebildet sein. Insbesondere kann/können die Mitnehmerfläche/n als Freiformflächen ausgebildet sein. Besonders bevorzugt ist jedoch, dass die Mitnehmerfläche/n im Querschnitt teilkreisförmig, bzw. nach Art eines Kreissegments, ausgebildet ist. Solche Formen ermöglichen einen vorteilhaften Krafteintrag und sind darüber hinaus fertigungstechnisch vergleichsweise einfach darstellbar.

In einer weiteren Ausgestaltung ist vorgesehen, dass die zumindest eine Mitnehmerfläche im Querschnitt einen Evolventenverlauf aufweist. Bevorzugt ist die Evolvente durch einen Zylinder definiert. Jedoch eignen sich auch andere Körper zur Definition der Evolvente. Durch eine, insbesondere zylinderbasierte, Evolventenverzahnung der Mitnehmerorgane kann insbesondere ein niedriger Verschleiß der Mitnehmerorgane erreicht werden.

In einer bevorzugten Ausgestaltung ist das mindestens eine erste Mitnehmerorgan als eine in radialer Richtung von dem Außensynchronring radial nach innen abstehende oder auskragende oder vorstehende oder vorspringende erste Mitnehmerlasche ausgebildet. Die erste Mitnehmerlasche ist insbesondere einstückig mit dem Außensynchronring ausgebildet. Besonders bevorzugt handelt es sich bei dem Außensynchronring um ein umgeformtes oder gespantes oder gesintertes Bauteil aus Messing oder Stahl.

Es ist dabei besonders bevorzugt, dass die eine in Umlaufrichtung, d. h. in Umfangsrichtung gemessene erste Breite der ersten Mitnehmerlasche in axialer Draufsicht bzw. in Richtung nach radial außen zunimmt und/oder divergiert. Insbesondere durch zunehmende Breiten in Richtung nach radial außen kann eine Art Zentrierung der Synchronringe relativ zueinander und insbesondere relativ zur Hauptdrehachse erreicht werden.

In einer weiteren Ausgestaltung ist vorgesehen, dass das mindestens eine zweite Mitnehmerorgan durch eine sich in axialer Richtung erstreckende, insbesondere als Hohlzylinderabschnitt ausgebildete bzw. geformte, innere Mitnehmerlasche ausgebildet ist. Eine solche zweite Mitnehmerlasche kann insbesondere als eine von einem Grundkörper des Innensynchronrings parallel zur Richtung der Hauptdrehachse vorspringende Lasche ausgebildet sein. Insbesondere in dieser Ausgestaltung können mehrere solche zweite Mitnehmerorgane als eine Art Kronenverzahnung auf dem Grundkörper des Innensynchronrings realisiert sein. Der Innensynchronring ist besonders bevorzugt aus Messing oder Stahl umgeformt oder gespant oder gesintert.

In einer Weiterbildung ist eine in Umlaufrichtung gemessene zweite Breite der zweiten Mitnehmerlasche in Richtung radial nach außen abnehmend und/oder konvergierend ausgebildet. Insbesondere dadurch können die ersten und zweiten Mitnehmerorgane im Kopplungsbereich komplementär, insbesondere komplementär gleichsinnig gekrümmt, zueinander ausgestaltet bzw. ausgebildet sein.

Bezüglich einer Gesamtbetrachtung der ersten und zweiten Mitnehmerorgane von Außensynchronring und Innensynchronring im formschlüssigen Kopplungszustand, so ist es, entsprechend einer weiteren Ausgestaltung, bevorzugt, dass in Umlaufrichtung in zumindest einer gemeinsamen radialen Bahn die zweiten Mitnehmerlaschen breiter sind als die ersten Mitnehmerlaschen. Das soll bedeuten, dass sich die zweiten Mitnehmerlaschen in Umfangsrichtung über ein größeres Kreissegment erstrecken als die ersten Mitnehmerlaschen, bzw. dass die zweiten Mitnehmerlaschen in Umfangsrichtung eine größere mittlere Breite aufweisen als die ersten Mitnehmerlaschen des Außensynchronrings. Denkbar ist jedoch auch die umgekehrte Situation, in welcher die ersten Mitnehmerlaschen in Umfangsrichtung breiter sind als die zweiten Mitnehmerlaschen. Möglich wäre es auch, dass die ersten und zweiten Mitnehmerlaschen die gleiche, bzw. etwa oder im Wesentlichen die gleiche Breite aufweisen.

Da die zweiten Mitnehmerlaschen bevorzugt als eine Kronenverzahnung ausgebildet sind, sind diese fertigungstechnisch vergleichsweise einfacher in einer größeren Breite zu erzeugen, da die inneren Mitnehmerlaschen trennende Ausnehmungen können umformtechnisch bzw. spanend in den Innensynchronring eingebracht werden.

Es ist in einer weiteren Ausgestaltung des Synchronringpakets besonders bevorzugt, dass zwischen Außensynchronring und Innensynchronring mindestens ein Zwischenring angeordnet ist, welcher ein Zwischenelement bei dem Reibschluss zwischen Innensynchronring und Außensynchronring bildet. Der Zwischenring ist mit dem Außensynchronring und Innensynchronring koaxial zur gemeinsamen Hauptdrehachse angeordnet. In Abhängigkeit der Ausführungsform kann/können ein, zwei oder auch mehrere Zwischenringe angeordnet bzw. vorhanden sein.

Nach Patentanspruch 15 ist eine Synchronkupplung vorgesehen, welche zumindest ein wie weiter oben beschriebenes Synchronringpaket, einschließlich aller vorweg und nachfolgend beschriebenen Ausgestaltungen und/oder Varianten, umfasst. Wegen Vorteilen und vorteilhaften Wirkungen wird auf die obigen und nachfolgende Ausführungen verwiesen.

Nach Patentanspruch 16 ist ein Getriebe mit zumindest einer wie zuvor beschriebenen Synchronkupplung vorgesehen. Vorteile und vorteilhafte Wirkungen ergeben sich unmittelbar aus den Vorteilen und vorteilhaften Wirkungen der Synchronkupplung.

Weitere Merkmale, Vorteile und Wirkungen der Erfindung ergeben sich aus der nachfolgenden Beschreibung eines bevorzugten Ausführungsbeispiels der Erfindung. Es zeigen:
FIG. 1 eine Explosionszeichnung eines Synchronringpakets als ein Ausführungsbeispiel der Erfindung;
FIG. 2 eine Draufsicht auf das Synchronringpaket in axialer Richtung;
FIG. 3 eine schematische Darstellung eines Querschnitts senkrecht zur Hauptdrehachse des Synchronpakets der FIG. 1.

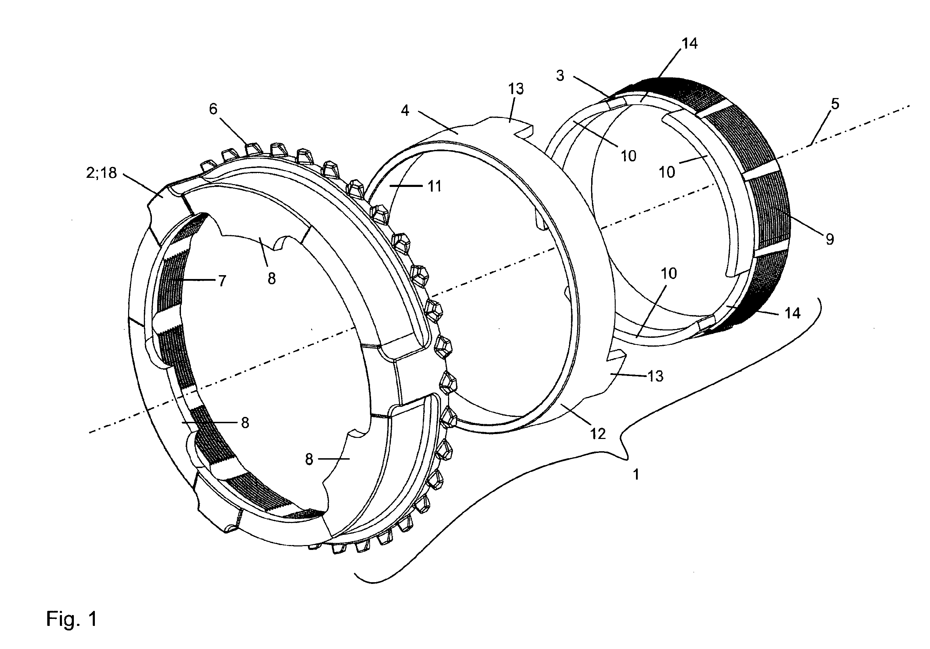

FIG. 1 zeigt in einer schematischen Explosionszeichnung ein Synchronringpaket 1 für ein Getriebe, insbesondere für ein Automobilgetriebe. Das Synchronringpaket 1 umfasst einen Außensynchronring 2, einen Innensynchronring 3 sowie einen Zwischenring 4. Bei der Montage werden Außensynchronring 2, Innensynchronring 3 und Zwischenring 4 ineinander geschoben, so dass der Zwischenring 4 zwischen dem Außensynchronring 2 und dem Innensynchronring 3 angeordnet ist. Die drei Ringe 2,3,4 sind koaxial zu einer Hauptdrehachse 5 angeordnet.

Der Außensynchronring 2 ist als ein Schmiedeteil ausgebildet und weist auf seiner in der Explosionszeichnung dem Innensynchronring 3 zugewandten Seite eine umlaufende Reihe von Sperrzähnen 6 auf, welche z.B. zum Eingreifen in eine nicht-dargestellte Schaltmuffe ausgebildet sind. Der Außensynchronring 2 weist eine konusförmig verlaufende, radiale Innenseite auf, welche eine erste Reibfläche 7 bildet. Ferner weist der Außensynchronring 2 drei radial nach innen gerichtete erste bzw. äußere Mitnehmerlaschen 8 auf.

Der Innensynchronring 3 weist dagegen eine nach außen gerichtete konische Außenfläche auf, die als eine zweite Reibfläche 9 ausgebildet ist. Zudem umfasst der Innensynchronring 3 drei zweite bzw. innere Mitnehmerlaschen 10.

Der Zwischenring 4 umfasst an seiner radialen Innenseite eine innere Reibfläche 11 und an seiner radialen Außenseite eine äußere Reibfläche 12. In Axialrichtung vorspringend, insbesondere vom Synchronringpaket vorspringend, weist der Zwischenring 4 Mitnehmerzähne 13, vorliegend genau drei Mitnehmerzähne 13 auf. Die Mitnehmerzähne 13 dienen zur formschlüssigen und verdrehsicheren Kopplung des Zwischenrings 4 mit einem (nicht dargestellten) Zahnrad.

Was die Mitnehmerzähne 13 betrifft, so können in Umfangrichtung weisende Anschlagflächen, insbesondere Stirnflächen bzw. Seitenflächen, ausgebildet zum Anschlagen an korrespondierende Anschlagflächen des Zahnrads, analog zu den ersten und zweiten Mitnehmerorganen 8,10 einen gekrümmten Verlauf aufweisen. Hier können gleiche bzw. analoge Vorteile und Wirkungen erreicht werden.

Im Betrieb wird das Synchronringpaket 1 in axialer Richtung zusammengeschoben, so dass die zweite Reibfläche 9 mit der inneren Reibfläche des Zwischenrings 11 und die äußere Reibfläche des Zwischenrings 12 mit der ersten Reibfläche 7 in Reibkontakt kommt, so dass Reibungskräfte übertragen werden und die drei Ringe 2,3,4 eine gemeinsame Winkelgeschwindigkeit um die Hauptdrehachse 5 einnehmen. Die Reibflächen 7, 9, 11, 12 können z.B. als eine Beschichtung oder als eine mechanische Aufrauhung oder als ein darauf geklebter bzw. geschweißter Belag usw. ausgebildet sein. In Umlaufrichtung sind die Reibflächen durchgängig 11, 12 oder in abgesetzten Bereichen 7, 9 ausgebildet.

Im Betrieb bzw. Einsatz, insbesondere bei einem Synchronisationsvorgang kommen die inneren Mitnehmerlaschen 10 mit den äußeren Mitnehmerlaschen 8 in Zahneingriff, so dass der Außensynchronring 2 und der Innensynchronring 3 durch den Zahneingriff in Umlaufrichtung um die Hauptdrehachse 5 formschlüssig gesichert sind, d. h. verdrehfest miteinander gekoppelt sind.

Die inneren Mitnehmerlaschen 10 sind als Hohlzylinderabschnitte oder Konusabschnitte ausgebildet, welche axial verlaufend in Verlängerung des Innensynchronrings 3 angeordnet und ausgerichtet sind. Die inneren Mitnehmerlaschen 10 bilden auf einem konusförmigen Grundkörper des Innensynchronrings eine Art Kronenverzahnung. Zwischen den inneren Mitnehmerlaschen 10 befinden sich Ausnehmungen 14, welche komplementär zur Aufnahme der äußeren Mitnehmerlaschen 8 ausgebildet sind.

Die äußeren Mitnehmerlaschen 8 sind als radial nach innen weisende bzw. vorspringende, in einer Radialebene zu der Hauptdrehachse 5 angeordnete Stege oder Vorsprünge oder Laschen ausgebildet. Im Betrieb liegen die äußeren Mitnehmerlaschen 8 in den Ausnehmungen 14. Die inneren und äußeren Mitnehmerlaschen 10 und 8 sind in den Ausmaßen derart bemessen, dass diese toleranzarm oder im Wesentlichen toleranzfrei oder im Wesentlichen spielfrei ineinander greifen können. Durch das Ineinandergreifen der Mitnehmerlaschen 8, 10 werden der Innensynchronring 3 und der Außensynchronring 2 in Umlaufrichtung um die Hauptdrehachse 5 formschlüssig, insbesondere verdrehsicher, miteinander gekoppelt.

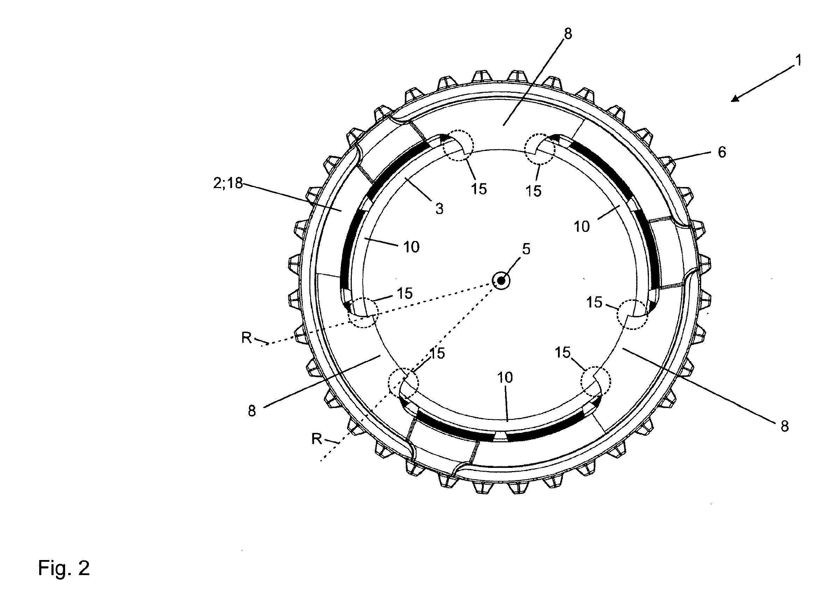

Wie sich insbesondere aus der FIG. 2 ergibt, welche eine axiale Draufsicht auf das Synchronringpaket 1 zeigt, werden zwischen den äußeren Mitnehmerlaschen 8 und den inneren Mitnehmerlaschen 10 Kopplungsbereiche 15 gebildet, in denen der Innensynchronring 3 und der Außensynchronring 2 in Umlaufrichtung aufeinander bzw. aneinander stoßen, und in welchen tangentiale Kräfte übertragen werden.

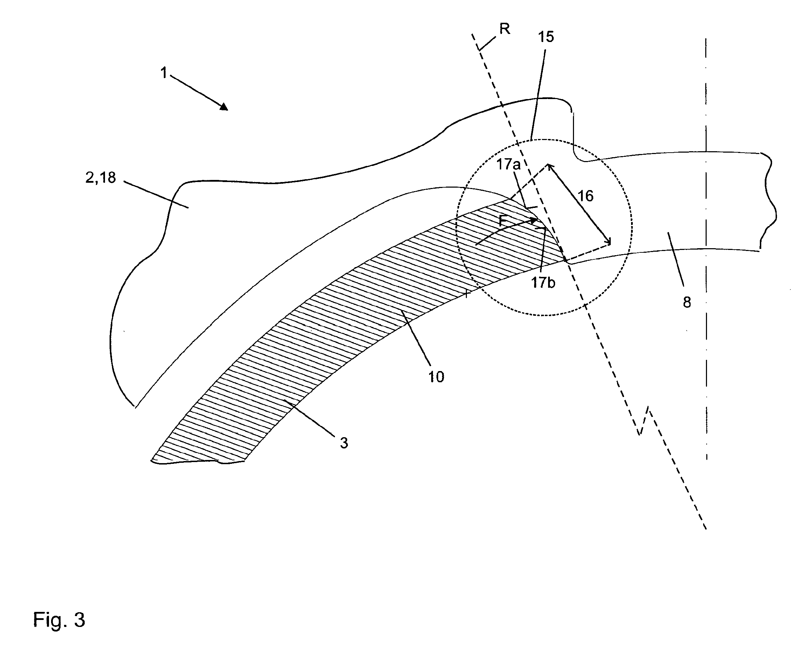

In den Kopplungsbereichen 15 liegen, die lediglich in FIG. 3 bezeichneten, Flanken 17a und 17b benachbarter Mitnehmerlaschen 8,10 bei optimalem Kontakt bzw. Kontaktflächen jeweils in einer gemeinsamen Mitnehmerfläche 16 (FIG. 3) an. Über diese Mitnehmerflächen 16 bzw. über die Flanken 17a und 17b werden in tangentialer Richtung in Drehrichtung wirkenden Kräfte F (FIG. 3) zwischen Außensynchronring und Innensynchronring übertragen.

Die FIG. 3 zeigt einen schematischen Querschnitt durch das Synchronringpaket 1 senkrecht zu der Hauptdrehachse 5 durch die Mitnehmerfläche 16 bzw. Flanken 17a und 17b als Detaildarstellung. Die Flanken 17a und 17b zeigen im Querschnitt einen gekrümmten Verlauf. Der gekrümmte Verlauf wird durch eine konkave Flanke 17a der äußeren Mitnehmerlasche 8 und eine konvexen Flanke 17b der inneren Mitnehmerlasche 10 gebildet ist. Damit sind die Flanken 17a und 17b der äußeren und der inneren Mitnehmerlasche 8, 10 im Bereich der Mitnehmerfläche 16 gleichsinnig, insbesondere gleichsinnig gekrümmt, ausgebildet. Insbesondere sind die Flanken 17a und 17b komplementär zueinander ausgebildet bzw. geformt. Durch die komplementären Formen können diese im Kontakt einen Flächenkontakt ausbilden. Bei ausreichender bzw. geeigneter Genauigkeit der Krümmungen, insbesondere bei lokal übereinstimmend korrespondierenden Krümmungen der Flanken 17a und 17b kann erreicht werden, dass sich der Flächenkontakt über im Wesentlichen die gesamte radiale und/oder axiale Breite der Mitnehmerlaschen 8, 10, zumindest jedoch im Kopplungsbereich 15 der mitnehmerlaschen 8, 10 erstreckt.

Um diese Ausgestaltung zu erreichen, ist die äußere Mitnehmerlasche 8 ausgehend von der Hauptdrehachse 5 radial nach außen divergierend oder in Umlaufrichtung breiter werdend ausgebildet. Dagegen ist die innere Mitnehmerlasche in der Umlaufrichtung schmaler werdend oder konvergierend realisiert.

Mit Bezug auf einen Radialvektor R bildet die äußere Mitnehmerlasche 8 im Kopplungsbereich 15 zur Formung der gemeinsamen Mitnehmerfläche 16 eine Art Keil aus, der zu der der inneren Mitnehmerlasche 10 zugewandten Seite gekrümmt ausgebildet ist. Der gekrümmte Verlauf der Mitnehmerfläche 16, bzw. des Flansches 17a, kann als eine freie Krümmung ausgebildet sein. Im vorliegenden Fall ist der gekrümmte Verlauf teilkreisförmig ausgebildet.

Der Übergang zwischen der Mitnehmerfläche 16 bzw. Flansch 17a und einem Grundkörper 18 des Außensynchronrings 2 ist stetig oder auslaufend zu dem Krümmungsverlauf ausgebildet, so dass im Kopplungsbereich bzw. im Anschlagsbereich zwischen Innensynchronring und Außensynchronring nur geringe Kerbwirkungen in den Außensynchronring 2 eingeleitet werden. Der Übergang kann auch durch einen zweiten teilkreisförmigen Abschnitt realisiert werden, welcher sich tangential an den ersten teilkreisförmigen Abschnitt anschließt.

### Bezugszeichenliste:

- 1: Synchronringpaket
- 2: Außensynchronring
- 3: Innensynchronring
- 4: Zwischenring
- 5: Hauptdrehachse
- 6: Sperrzähne
- 7: erste Reibfläche
- 8: äußere Mitnehmerlasche
- 9: zweite Reibfläche
- 10: innere Mitnehmerlasche
- 11: innere Reibfläche
- 12: äußere Reibfläche
- 13: Mitnehmerzähne
- 14: Ausnehmungen
- 15: Kopplungsbereich
- 16: Mitnehmerfläche
- 17a, 17b: Flanken
- 18: Grundkörper

- F: Kräfte
- R: Radialvektor

## Patentansprüche

1. Synchronringpaket (1) für ein Getriebe, umfassend
einen Außensynchronring (2) und einen Innensynchronring (3), welche koaxial zu einer gemeinsamen Hauptdrehachse (5) angeordnet sind, wobei der Außensynchronring (2) mindestens ein erstes Mitnehmerorgan (8) aufweist und der Innensynchronring (3) mindestens ein zweites Mitnehmerorgan (10) aufweist,
wobei der Außensynchronring (2) und der Innensynchronring (3) über das zumindest eine erste und das zumindest eine zweite Mitnehmerorgan (8,10) in mindestens einem Kopplungsbereich (15) in Umlaufrichtung formschlüssig miteinander koppelbar sind, wobei die Mitnehmerorgane (8,10) in dem Kopplungsbereich (15) zueinander korrespondierende Mitnehmerflächen (17a, 17b) ausbilden,
**dadurch gekennzeichnet, dass**
zumindest eine der zueinander korrespondierenden Mitnehmerflächen (17a, 17b) in Querschnitten senkrecht zur Hauptdrehachse (5) einen gekrümmten Verlauf aufweist.

2. Synchronringpaket (1) nach Anspruch 1, wobei der Verlauf jeder der Mitnehmerflächen (17a, 17b) im Querschnitt in axialer Richtung jeweils konstant ist.

3. Synchronringpaket (1) nach Anspruch 1 oder 2, wobei beide Mitnehmerflächen (17a, 17b) zumindest im Kopplungsbereich (15) in Querschnitten gleichsinnig gekrümmt sind.

4. Synchronringpaket (1) nach einem der vorhergehenden Ansprüche, wobei die Mitnehmerflächen in Querschnitten einfach gekrümmt sind.

5. Synchronringpaket (1) nach einem der vorhergehenden Ansprüche, wobei die Mitnehmerfläche (17a, 17b) des zumindest einen ersten Mitnehmerorgans (8) in Querschnitten konkav und das mindestens eine zweite Mitnehmerorgan (10) in Querschnitten konvex gekrümmt sind.

6. Synchronringpaket (1) nach einem der vorhergehenden Ansprüche, wobei die Mitnehmerflächen (17a, 17b) konstante Krümmungsradien aufweisen.

7. Synchronringpaket (1) nach einem der vorhergehenden Ansprüche, wobei ein Betrag des Krümmungsradius der zumindest einen Mitnehmerfläche (17a, 17b) im Bereich zwischen 1 mm und 30mm, bevorzugt zwischen 1 mm und 20mm, bevorzugt zwischen 1 mm und 10mm, besonders bevorzugt bei 2mm, 4mm, 6mm, oder 8mm liegt.

8. Synchronringpaket (1) nach einem der vorhergehenden Ansprüche 1 bis 6, wobei die zumindest eine Mitnehmerfläche (17a, 17b) im Querschnitt einen Evolventenverlauf aufweist.

9. Synchronringpaket (1) nach einem der vorhergehenden Ansprüche, wobei das mindestens eine erste Mitnehmerorgan (8) als eine in radialer Richtung von dem Außensynchronring (2) nach radial innen abstehende, erste Mitnehmerlasche (8) ausgebildet ist.

10. Synchronringpaket (1) nach Anspruch 9, wobei eine in Umlaufrichtung gemessene erste Breite der ersten Mitnehmerlasche (8) in Richtung nach radial außen zunimmt und/oder divergiert.

11. Synchronringpaket (1) nach einem der vorhergehenden Ansprüche, wobei das mindestens eine zweite Mitnehmerorgan (10) durch eine sich in axialer Richtung erstreckende, insbesondere als Hohlzylinderabschnitt geformte, zweite Mitnehmerlasche (10) ausgebildet ist.

12. Synchronringpaket (1) nach Anspruch 11, wobei eine in Umlaufrichtung gemessene zweite Breite der zweiten Mitnehmerlasche (10) in Richtung nach radial außen abnimmt und/oder konvergiert.

13. Synchronringpaket (1) nach einem der Ansprüche 11 oder 12, wobei in Umlaufrichtung in zumindest einer gemeinsamen radialen Bahn die zweite Mitnehmerlasche (10) breiter ist als die erste Mitnehmerlasche (8).

14. Synchronringpaket (1) nach einem der vorhergehenden Ansprüche, umfassend zumindest einen Zwischenring (4), welcher zwischen dem Außensynchronring (2) und dem Innensynchronring (3) koaxial zu der gemeinsamen Hauptdrehachse (5) angeordnet ist.

15. Synchronkupplung umfassend zumindest ein Synchronringpaket nach einem der Ansprüche 1 bis 14.

16. Getriebe mit zumindest einer Synchronkupplung nach Anspruch 15.

## Claims

1. Synchroniser ring assembly (1) for a gear unit, comprising
an outer synchroniser ring (2) and an inner synchroniser ring (3), which are arranged coaxially with a common main axis of rotation (5), wherein the outer synchroniser ring (2) has at least one first driving member (8), and the inner synchroniser ring (3) has at least one second driving member (10),
wherein the outer synchroniser ring (2) and the inner synchroniser ring (3) can be coupled to one another positively in a direction of revolution in at least one coupling zone (15) by means of the at least one first driving member and the at least one second driving member (8, 10), wherein the driving members (8, 10) form mutually corresponding driving surfaces (17a, 17b) in the coupling zone (15),
**characterized in that**
at least one of the mutually corresponding driving surfaces (17a, 17b) has a curved profile in cross sections perpendicular to the main axis of rotation (5).

2. Synchroniser ring assembly (1) according to Claim 1, wherein the profile of each of the driving surfaces (17a, 17b) is constant in cross section in an axial direction.

3. Synchroniser ring assembly (1) according to Claim 1 or 2, wherein both driving surfaces (17a, 17b) are curved in the same sense in cross sections, at least in the coupling zone (15).

4. Synchroniser ring assembly (1) according to one of the preceding claims, wherein the driving surfaces have a single curvature in cross sections.

5. Synchroniser ring assembly (1) according to one of the preceding claims, wherein the driving surface (17a, 17b) of the at least one first driving member (8) is concavely curved in cross sections, and the at least one second driving member (10) is convexly curved in cross sections.

6. Ssynchroniser ring assembly (1) according to one of the preceding claims, wherein the driving surfaces (17a, 17b) have constant radii of curvature.

7. Synchroniser ring assembly (1) according to one of the preceding claims, wherein a magnitude of the radius of curvature of the at least one driving surface (17a, 17b) is in a range between 1 mm and 30 mm, preferably between 1 mm and 20 mm, preferably between 1 mm and 10 mm, particularly preferably 2 mm, 4 mm, 6 mm or 8 mm.

8. Synchroniser ring assembly (1) according to one of preceding Claims 1 to 6, wherein the at least one driving surface (17a, 17b) has an involute profile in cross section.

9. Synchroniser ring assembly (1) according to one of the preceding claims, wherein the at least one first driving member (8) is designed as a first driving lug (8), which projects radially inward in a radial direction from the outer synchroniser ring (2).

10. Synchroniser ring assembly (1) according to Claim 9, wherein a first width of the first driving lug (8), measured in a direction of revolution, increases and/or diverges in a radially outward direction.

11. Synchroniser ring assembly (1) according to one of the preceding claims, wherein the at least one second driving member (10) is formed by a second driving lug (10) extending in an axial direction, in particular a driving lug shaped as a hollow cylindrical segment.

12. Synchroniser ring assembly (1) according to Claim 11, wherein a second width of the second driving lug (10), measured in a direction of revolution, decreases and/or converges in a radially outward direction.

13. Synchroniser ring assembly (1) according to one of Claims 11 or 12, wherein the second driving lug (10) is wider than the first driving lug (8) in at least one common radial path in a direction of revolution.

14. Synchroniser ring assembly (1) according to one of the preceding claims, comprising at least one intermediate ring (4), which is arranged between the outer synchroniser ring (2) and the inner synchroniser ring (3), coaxially with the common main axis of rotation (5).

15. Synchroniser clutch comprising at least one synchroniser ring assembly according to one of Claims 1 to 14.

16. Gear unit having at least one synchroniser clutch according to Claim 15.

## Revendications

1. Ensemble de bagues de synchronisation (1) pour une transmission, comprenant
une bague de synchronisation extérieure (2) et une bague de synchronisation intérieure (3), qui sont disposées coaxialement à un axe de rotation principal commun (5), dans lequel la bague de synchronisation extérieure (2) présente au moins un premier organe d'entraînement (8) et la bague de synchronisation intérieure (3) présente au moins un deuxième organe d'entraînement (10),
dans lequel la bague de synchronisation extérieure (2) et la bague de synchronisation intérieure (3) peuvent être couplées l'une à l'autre au moyen dudit au moins un premier et dudit au moins un deuxième organes d'entraînement (8, 10) par emboîtement dans au moins une zone de couplage (15) en direction périphérique,
dans lequel les organes d'entraînement (8, 10) forment dans la zone de couplage (15) des faces d'entraînement (17a, 17b) se correspondant mutuellement,
**caractérisé en ce qu'**au moins une des faces d'entraînement (17a, 17b) se correspondant mutuellement présente une allure courbe dans des sections transversales perpendiculaires à l'axe de rotation principal (5).

2. Ensemble de bagues de synchronisation (1) selon la revendication 1, dans lequel l'allure de chacune des faces d'entraînement (17a, 17b) est chaque fois constante en direction radiale en section transversale.

3. Ensemble de bagues de synchronisation (1) selon la revendication 1 ou 2, dans lequel les deux organes d'entraînement (17a, 17b) sont incurvés dans le même sens en sections transversales au moins dans la zone de couplage (15).

4. Ensemble de bagues de synchronisation (1) selon l'une quelconque des revendications précédentes, dans lequel les faces d'entraînement sont incurvées simplement en sections transversales.

5. Ensemble de bagues de synchronisation (1) selon l'une quelconque des revendications précédentes, dans lequel la face d'entraînement (17a, 17b) dudit au moins un premier organe d'entraînement (8) est concave en sections transversales et ledit au moins un deuxième organe d'entraînement (10) est de courbure convexe en sections transversales.

6. Ensemble de bagues de synchronisation (1) selon l'une quelconque des revendications précédentes, dans lequel les faces d'entraînement (17a, 17b) présentent des rayons de courbure constants.

7. Ensemble de bagues de synchronisation (1) selon l'une quelconque des revendications précédentes, dans lequel une valeur du rayon de courbure de ladite au moins une face d'entraînement (17a, 17b) se situe dans la plage entre 1 mm et 30 mm, de préférence entre 1 mm et 20 mm, de préférence encore entre 1 mm et 10 mm, et vaut de préférence enfin 2 mm, 4 mm, 6 mm ou 8 mm.

8. Ensemble de bagues de synchronisation (1) selon l'une quelconque des revendications précédentes 1 à 6, dans lequel ladite au moins une face d'entraînement (17a, 17b) présente en section transversale une allure en développante.

9. Ensemble de bagues de synchronisation (1) selon l'une quelconque des revendications précédentes, dans lequel ledit au moins un premier organe d'entraînement (8) est réalisé sous la forme d'une première patte d'entraînement (8) saillante radialement vers l'intérieur en direction radiale à partir de la bague de synchronisation extérieure (2).

10. Ensemble de bagues de synchronisation (1) selon la revendication 9, dans lequel une première largeur mesurée en direction périphérique de la première patte d'entraînement (8) augmente et/ou diverge en direction radiale vers l'extérieur.

11. Ensemble de bagues de synchronisation (1) selon l'une quelconque des revendications précédentes, dans lequel ledit au moins un deuxième organe d'entraînement (10) est formé par une deuxième patte d'entraînement (10) s'étendant en direction axiale, en particulier en forme de partie cylindrique creuse.

12. Ensemble de bagues de synchronisation (1) selon la revendication 11, dans lequel une deuxième largeur mesurée en direction périphérique de la deuxième patte d'entraînement (10) diminue et/ou converge en direction radiale vers l'extérieur.

13. Ensemble de bagues de synchronisation (1) selon l'une des revendications 11 ou 12, dans lequel la deuxième patte d'entraînement (10) est plus large que la première patte d'entraînement (8) en direction périphérique dans au moins une partie radiale commune.

14. Ensemble de bagues de synchronisation (1) selon l'une quelconque des revendications précédentes, comprenant au moins une bague intermédiaire (4), qui est disposée entre la bague de synchronisation extérieure (2) et la bague de synchronisation intérieure (3) coaxialement à l'axe de rotation principal commun (5).

15. Accouplement synchrone comprenant au moins un ensemble de bagues de synchronisation selon l'une quelconque des revendications 1 à 14.

16. Transmission comportant au moins un accouplement synchrone selon la revendication 15.
